# EUROPEAN PATENT APPLICATION

(11) **EP 0 528 410 A1**
(43) Date of publication of application: **24.02.1993**
(21) Application number: 92114130.5
(22) Date of filing: 19.08.1992
(51) Int. Cl.: B62D 25/16

(54) **Vehicle wheel splash attenuator**

(30) Priority: 19.08.1991 JP 231016/91
(71) Applicant: BRIDGESTONE CORPORATION, Tokyo 104 (JP)
(72) Inventor: Nakayama, Takeshi, Chigasaki-shi, Kanagawa-ken (JP); Kurimoto, Itaru, Yokohama-shi, Kanagawa-ken (JP); Endo, Koutaro, Minato-ku, Tokyo (JP)
(74) Representative: Goetz, Rupert, Dipl.-Ing.

(57) **Abstract**

A vehicle wheel splash attenuator comprising a reflection-suppressing member (5) is designed to be installed in a wheel case (1) so as to face a tire (2) and has a space (9) of more than 15 mm with respect to the inner face of the wheel case (1) and has formed therein a plurality of apertures (4) through which muddy water (3) flung by the tire (2) is passed. The reflection-suppressing member (5) thus suppresses the reflection of the water (3) impinging upon the wheel case (1). The opening ratio of the apertures (4) is within a range of 25 to 55 %, the apertures (4) are elongated circumferentially of the tire (2) and have a diameter of 30 to 150 mm, and the width of those strands (6, 7) defining together the apertures (4) and facing the tire (2) is within a range of 2 to 15 mm. The cross section of at least the strands (6) projected toward the tire (2) is shaped into a triangle of which the apex is directed toward the tire (2) and the bottom is toward the wheel case (1).

## Description

The present invention relates to a splash attenuator for use with a vehicle wheel case to prevent muddy or rain water flung from the tire from being sprayed and splashed by reflection when it impinges upon the mud guard or wheel case.

Various types of splash attenuators have been proposed. A typical one is known from US-A 4,205,861. The vehicle wheel spray collector disclosed there is shown in figs. 1 and 2 attached hereto. A shield 200 is provided inside a fender 100 and faces a front wheel 101. The shield 200 has formed therein a plurality of apertures 102 through which rain water or the like flung from the wheel 101 is passed. The shield 200 and fender 100 are spaced from each other. A plurality of troughs 103 is formed between adjacent apertures 102. The spray collected in these troughs 103 flows into a runoff gutter 104 provided beneath the forward end of the shield 200. The runoff gutter 104 is inclined to dump the drainage water. Another runoff gutter 105 is provided beneath the rear end of the shield 200 and is also inclined to dump the drainage rain water. There is provided a flange 106 at the boundary between the trough 103 and aperture 102. Water collected in the trough 103 surrounded by the flange 106 cannot easily return into the aperture 102 because of the flange thus provided.

In this conventional spray collector, the ratio of the whole opening area of the troughs 103 to the total surface area of the shield 200 is small, so that water is flung from the wheel 101 also against surfaces other than the troughs 103. In other words, the amount of water flung to the shield 200 is larger than that of the water which passes through the shield 200, and so water reflected from the shield 200 is sprayed. The spray collector using such shield 200 cannot satisfactorily perform its function.

Accordingly, the present invention has as an object to provide a vehicle wheel splash attenuator which prevents water reflected from the mud guard or wheel case from being sprayed and splashed.

The above object can be accomplished by providing, according to the present invention, a reflection-suppressing member disposed within the mud guard or wheel case so as to face the tire and made of strands between which there is defined a plurality of apertures through which water flung from the tire is passed, spacing the reflection-suppressing member and the inner face of the wheel case more than 15 mm from each other, selecting within a range of 25 to 55 % the ratio (opening ratio) of the area all the apertures occupy to the whole surface area of the reflection-suppressing member that faces the tire, the apertures being elongated circumferentially of the tire and having a diameter within a range of 30 to 150 mm and the width of each of the strands facing the tire being within a range of 2 to 15 mm, the cross-section of at least the strands projected toward the tire having the shape of a triangle the apex of which is directed toward the tire and the bottom is directed toward the wheel case.

In case the splash attenuator is provided within the wheel case, the water flung by the tire is passed mainly through the reflection-suppressing member and the water having the impact or impingement energy thereof attenuated impinges upon the inner face of the wheel case from the plurality of apertures. The water having impinged upon the inner face of the wheel case will be returned by reflection toward the tire, but the reflection-suppressing member attenuates the reflection energy of the water and thus the water is prevented from splashing. The space of 15 mm or more between the reflection-suppressing member and the inner face of the wheel case serves as a zone for absorbing the impingement and reflection energies of the water. Further, since the strands have a triangular cross section of which the apex is directed toward the tire and the bottom is toward the wheel case, the major part of the water flung from the tire is passed through the apertures, whereby the water impinging upon the strands is prevented from being sprayed. The strands can be integrally formed from a synthetic resin. Thus the reflection-suppressing member can be manufactured with low costs, and can be easily installed to the wheel case.

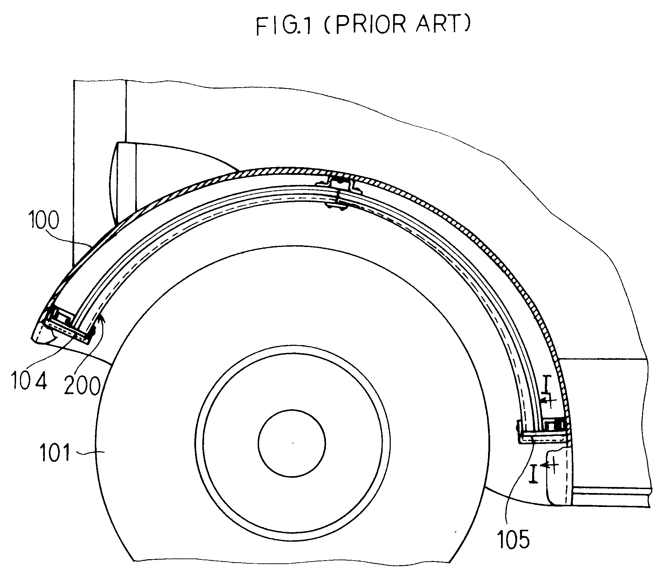

- Fig. 1: is a side elevation of a conventional vehicle wheel spray collector;
- Fig. 2: is a sectional view taken along the line II-II in Fig. 1;
- Fig. 3: is a plan view of the reflection-suppressing member in the splash attenuator according to the present invention;
- Fig. 4: is a sectional view taken along the line A-A of Fig. 3;
- Fig. 5: is a sectional view taken along the line B-B in Fig. 3;
- Fig. 6: is a simplified side elevation of the entire splash attenuator;
- Fig. 7: is a simplified side elevation of another embodiment of the present invention;
- Fig. 8: is a simplified side elevation of still another embodiment of the present invention;
- Fig. 9: is a sectional view showing an embodiment of the means for installing the reflection-suppressing member to the wheel case;
- Fig. 10: is a sectional view similar to Fig. 4, showing another embodiment of the reflection-suppressing member;
- Fig. 11: is a sectional view similar to Fig. 5 of the embodiment shown in Fig. 10;
- Fig. 12: is a sectional view of still another embodiment of the reflection-suppressing member;
- Fig. 13: is a detail, enlarged in scale, of Fig. 12;
- Fig. 14: is a sectional view of a reflection-suppressing member formed in the shape of a tortoise shell;
- Fig. 15: is a sectional view of a reflection-suppressing member formed in the shape of a lattice;
- Fig. 16: is a plan view of an embodiment in which diagonal strands are provided in a reflection-suppressing member having the form of a lattice; and
- Fig. 17: is a sectional view of an embodiment in which a cushion layer is provided in the space between the reflection-suppressing member and the wheel case inner face.

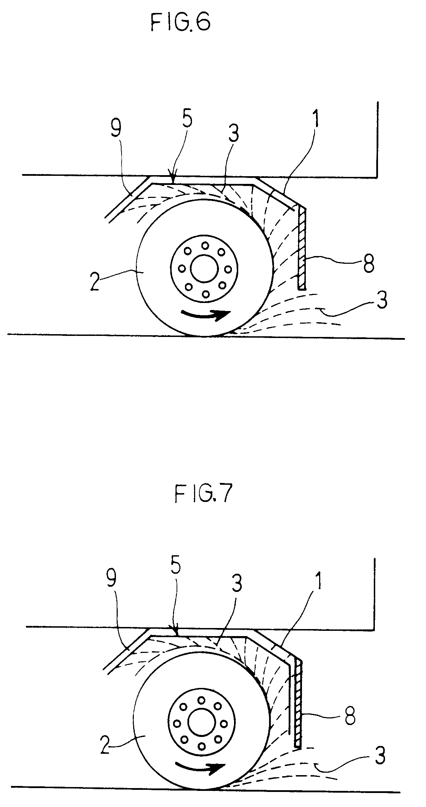

In the first embodiment shown in fig. 3, a mud guard or wheel case 1 (see Fig. 6) has a reflection-suppressing member 5 attached hereto which has a plurality of apertures 4 facing a tire 2 and through which muddy water or the like 3 flung from the tire 2 is passed. The reflection-suppressing member 5 suppresses the reflection of the muddy water having impinged upon the wheel case 1. More particularly, the reflection-suppressing member 5 is made of a plurality of vertical strands 6 spaced a predetermined distance from each other and connected to each other by means of horizontal strands 7, the apertures 4 being defined by these vertical and horizontal strands 6 and 7.

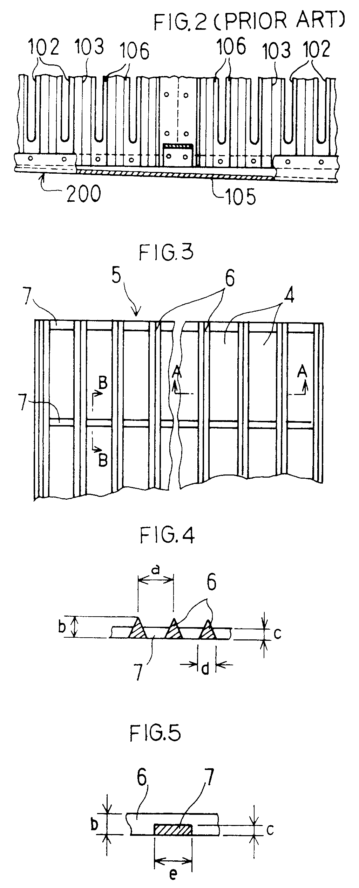

The strands 6 have a triangular cross section as shown in Fig. 4, and they are fitted in the strands 6 as shown in Fig. 5. The spacing (a) between the apexes of the strands 6 is approximately 6,7 mm, the strands 6 have a height (b) of about 3,7 mm and the strands 7 are about 2 mm thick (c). The bottom length (d) of the triangular cross section of the strands 6 is approximately 3,3 mm. The strands 7 are approximately 7 mm wide (e). The reflection-suppressing member 5 measures about 438,8 mm in width and about 942 mm in length. The reflection-suppressing member 5 is mounted to the inner face of wheel case 1 in such a manner that the apex of the triangular cross section of the strands 6 is directed toward the tire. The apertures 4 are elongated circumferentially of the tire 2 for the water splash from the tire to be smoothly directed into the reflection-suppressing member 5.

Desirably, the strands 7 should be smaller in number or dimensions and their width (e) should preferably be within a range of about 3 to 10 mm and they should be spaced about 80 to 120 mm from each other in view of their durability. The strands 6 should preferably have a triangular cross section having a vertex angle as acute as 90° or less for full performance of its splash-attenuating function. The horizontal strands 7 may be designed to have a triangular cross section as well.

Fig. 6 shows the reflection-suppressing member 5 shown in Fig. 3 and installed to the inner face of wheel case 1. Also a mud guard 8 is installed behind the wheel case 1. The reflection-suppressing member 5 is to be installed with a space 9 with respect to the inner face of wheel case 1. The space 9 serves as an energy absorbing zone, and it should be at least 15 mm.

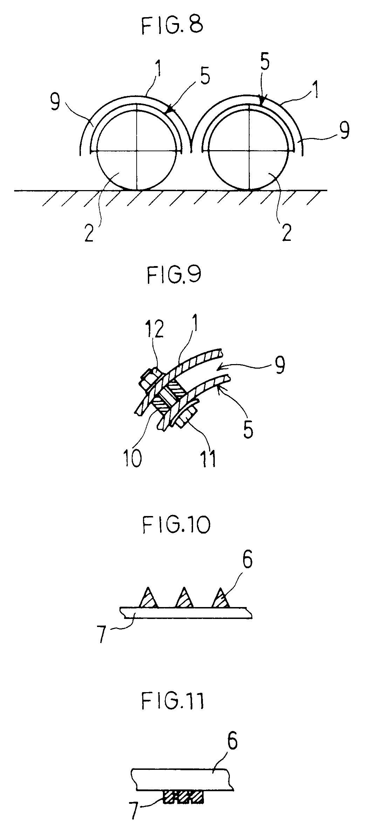

Fig. 7 shows an embodiment in which the reflection-suppressing member 5 is provided such as to extend inside of the mud guard 8.

Fig. 8 shows the reflection-suppressing member 5 used in two wheel cases 1 for tandem wheels, the wheel case 1 being different in shape from the aforementioned one. The reflection-suppressing member 5 is installed in each of the wheel cases 1 with the space 9 defined between the member 5 and the inner face of each wheel case 1. For defining the space 9, the reflection-suppressing member 5 is installed to the wheel case 1 with a spacer 10 placed between them as shown in fig. 9. The member 5, wheel case 1 and the spacer 10 are fastened to one another with a bolt 11 and nut 12.

In the first embodiment, the vertical strands 6 project toward the tire 2. These strands 6 have a triangular cross section of which the apex is directed toward the tire 2 and the bottom toward the wheel case 1. The width of the strands 6 and 7 facing the tire 2, namely, the bottom length (d) of the vertical strands 6 and the width (e) of the horizontal strands 7, is within a range of 2 to 15 mm. If these dimensions (d) and (e) are less than 2 mm, the junction of the strands 6 and 7 will be weak and possibly broken. On the contrary, if the dimensions (d) and (e) are more than 15 mm, the impinging water from the tire 2 will be much sprayed. In this case, the splash attenuator will show a degraded function. The ratio of the total area occupied by all the apertures 4 to the whole surface area of the reflection-suppressing member that faces the tire, that is, the opening ratio is within a range of 25 to 55 % and the diameter of the apertures 4 elongated circumferentially of the tire 2 is within a range of 30 to 150 mm. If the diameter of the apertures 4 exceeds 150 mm, the strands 6 and 7 will be resonant with the vibration of the vehicle and will be destroyed before long. If the diameter is less than 30 mm, the strands will have a degraded function of splash attenuation. If the opening ratio exceeds 55 %, the reflection-suppressing member 5 will be weakened, and if it is less than 25 %, the function of splash attenuation will be degraded.

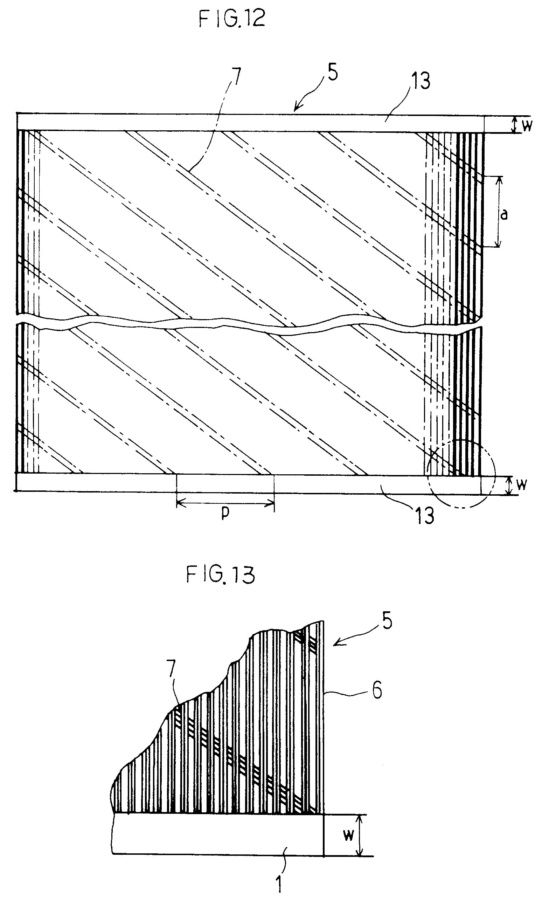

Figs. 10 and 11 show an embodiment in which the shape of the horizontal strands 7 and their position to the vertical strands 6 are different from the aforementioned embodiments. However, the strands 6 and 7 have similar cross sectional shapes to those shown in figs. 4 and 5 and their basic arrangement is similar to that shown in figs. 3 to 5.

Fig. 12 shows an embodiment in which the strands 7 in the reflection-suppressing member 5 are disposed diagonally and frame members 13 are provided at the top and bottom, respectively, of the member 5. The diagonal strands 7 are spaced with pitches P of about 120 mm from each other. The width W of the frame members 13 is in the order of 21 mm. The entire reflection-suppressing member 5 measures about 935 mm in length and 435 mm in width, and weighs about 600 to 850 g.

Fig. 13 is a drawing, enlarged in scale, of the portion encircled with a two dot dash line in fig. 12.

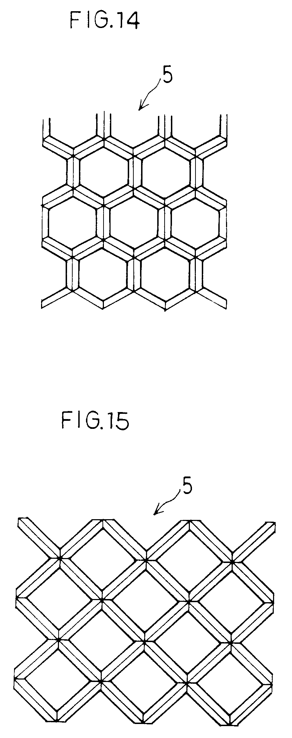

Figs. 14 to 16 show various variants of the reflection-suppressing member 5. In these variants, the strands have a similar triangular cross sectional shape to that of the vertical strands 6 in the aforementioned embodiment.

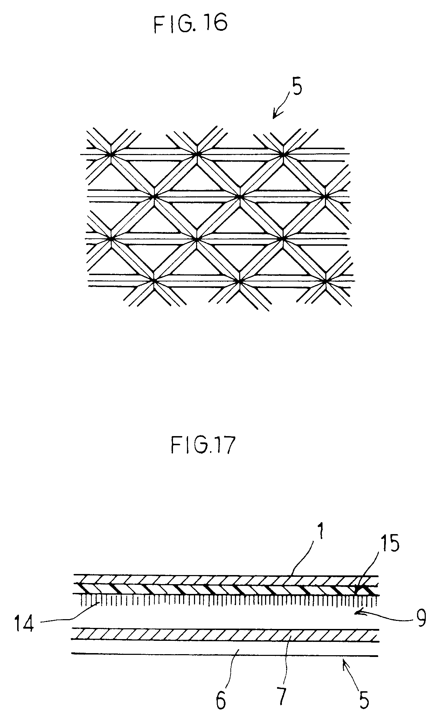

Fig. 17 shows an embodiment in which the space 9 is not an air space but has provided therein a resin- or rubber-made cushion layer 15 of an artificial lawn type having thin resilient projections 14 (of 0,5 to 1,5 mm in diameter) arranged at a density of about 80 %. This layer 15 absorbs more impact energy of the muddy water having passed through the apertures 4 in the reflection-suppressing member 5.

The reflection-suppressing member 5 should preferably be formed integrally from a plastic material such as polyethylene or the like to reduce its weight. As to the mud guard 8, the embodiment disclosed in EP 0 425 852 A1 is suitably usable.

When the space 9 and reflection-suppressing member 5 were not provided in the wheel case 1, the splash rate was 72 %. However, it is 49 % in case the wheel case 1 is provided with the space 9 and reflection-suppressing member 5. Further, in case the cushion layer 15 is provided in the space 9, the splash rate is 25 to 35 %.

## Claims

1. A vehicle wheel splash attenuator having a reflection-suppressing member (5) to be disposed within a wheel case (1) so as to face a tire (2) and made of strands (6, 7) between which there is defined a plurality of apertures (4) through which muddy water (3) flung from the tire (2) is passed,
**characterized** in that
- said reflection-suppressing member (5) and said inner face of the wheel case (1) are spaced more than 15 mm from each other,
- the ratio of the total area occupied by all said apertures (4) to the whole surface area of said reflection-suppressing member (5) that faces the tire (2) is selected within a range of 25 to 55 %,
- the diameter of said apertures (4) elongated circumferentially of the tire (2) is within a range of 30 to 150 mm,
- the width of each of said strands (6, 7) facing the tire (2) is within a range of 2 to 15 mm, and
- the cross-section of at least the strands (6) projected toward the tire (2) is shaped into a triangle of which the apex is directed toward the tire and the bottom is directed toward the wheel case (1).

2. A vehicle wheel splash attenuator as set forth in Claim 1, wherein said reflection-suppressing member (5) is formed integrally from a plastic material.

3. A vehicle wheel splash attenuator as set forth in Claim 1 or 2, wherein a cushion layer (15) is provided in said space between said reflection-suppressing member (5) and said inner face of the wheel case (1).
